## Europäisches Patentamt

## European Patent Office

## Office européen des brevets

(11) Publication number: **0 026 648**
**B1**

## EUROPEAN PATENT SPECIFICATION

(45) Date of publication of patent specification: **13.08.86**

(21) Application number: **80303386.9**

(22) Date of filing: **26.09.80**

(51) Int. Cl.⁴: **G 06 F 15/16,** G 06 F 12/06, G 06 F 13/28

(54) **Digital data transfer apparatus.**

(30) Priority: **26.09.79 US 79209**

(43) Date of publication of application:
**08.04.81 Bulletin 81/14**

(45) Publication of the grant of the patent:
**13.08.86 Bulletin 86/33**

(84) Designated Contracting States:
**DE FR GB IT SE**

(56) References cited:
FR-A-2 235 427
US-A-4 159 532

PROCEEDINGS OF THE NATIONAL ELECTRONICS CONFERENCE, vol. 32, 16-18- Oct. 1978, Oak Brook, Illinois, US MITTON et al.: "Microprocessor based communications interfaces", pages 61-63.

NACHRICHTENTECHNIKELEKTRONIK, vol. 29, no. 6, June 1979, Berlin, DE CIMANDER et al.: "Mehrmikrorechnersysteme mit Registerkopplung", pages 229-232

(73) Proprietor: **SPERRY CORPORATION**
**1290, Avenue of the Americas**
**New York, N.Y. 10019 (US)**

(72) Inventor: **Fung, Anthony Kwok**
**16565, Mt. Michaelis Circle**
**Fountain Valley California 92708 (US)**
Inventor: **Mintzlaff, Roger Guy**
**13702, Yorba St.**
**Tustin California 92680 (US)**

(74) Representative: **Orchard, Oliver John**
**JOHN ORCHARD & CO. Staple Inn Buildings**
**North High Holborn**
**London WC1V 7PZ (GB)**

(56) References cited:
PROCEEDINGS OF THE COMPCON, conference on 4-7 September 1979 in Washington; Proceedings printed in New York, US BUSTOS et al.: A parallel array of microprocessors- an alternative solution to diffusion problems", pages 380-389.

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**0 026 648**

(56) References cited:
**PROCEEDINGS OF THE COMPCON; conference on 4-7 September 1979 in Washington; Proceedings printed in New York, US PEARSE O'GRADY: "Interprocessor communication in multiprocessor simulation systems", pages 300-306.**

**Computer, vol. 10, no. 5, May 1977 pp. 68-74**
**3rd Euromicro Symposium, Amsterdam, 1977, pp. 16-22**

## Description

This invention relates to digital data transfer apparatus and may in particular be used to transfer data between two computing devices such as a computer and a microprocessor.

It is sometimes desirable to interconnect a computer, such as a minicomputer, and a microprocessor in order to exploit the inherent capabilities of each to enhance the capabilities of the other. Shortcomings of known prior art arrangements have been the limitations on the transfer of data between the respective memories associated with the two computing devices. It has, for example, been necessary in the past to set up the source and destination memory address in an address register, and initiate a specifically dedicated external transfer operation sequence to transfer the data to an intermediate register, and from the register to the destination memory. Quite apart from often requiring a large amount of extra hardware and software to carry out the information transfer, this prior art operation is usually also rather time consuming whenever large numbers of data need to be transferred.

The present invention provides an interface which utilizes internal instructions of a microprocessor, such as a "block move" instruction for re-locating data within its local memory, to effect an external data transfer from its memory to that of a computer. Similarly, internal instructions are used for the transfer in the reverse direction.

The hardware required for the digital transfer apparatus of the present invention is comparatively simple and comprises mainly appropriate registers for storing data or addresses, i.e. it uses well known components which are readily available. A map key register may be included in the interface to map data signals provided by the first computing device into addresses of the second computing device and thereby extend the available memory space.

French Patent 2 235 427 discloses an interface system between a host computer and a satellite which includes a bus system, address and data registers, and control logic. This patent does not disclose the idea of using an internal instruction of a microprocessor to effect an external transfer.

Techniques for the exchange of data between microcomputers were discussed at a Euromicro symposium held in Amsterdam and reported in Euromicro 1977 published by the North-Holland Publishing Company at pages 16—22 under the title "Methods of Data exchange between Microcomputers" by H. Bellm and A. Sauer.

One of the methods uses direct memory access by which the receive CPU is halted to enable the send CPU to have access to the address bus and data bus of the receive CPU.

Methods of memory bank switching, which involve concatenating a bank indicator, which is separate from a logical address, with the entire logical address in order to obtain a physical address, are described in a special feature article entitled "Memory extension techniques for minicomputers" published in Computer Volume 10, No. 5, May 1977 at pages 68—74 by Mary Poppendieck and Edouard J. Desautels. In one of the systems described a flip-flop on the end of an I/O channel acts as a bank switch.

However none of the arrangements described previously either suggests or includes the features by which the accompanying claim 1 is characterised.

As described in detail below, the transfer apparatus according to the present invention as defined in the claims permits, e.g., the transfer of data in a direct memory access mode from the memory of a microprocessor to the memory of a minicomputer, and vice versa.

The invention will now be described further by way of an embodiment and with reference to the accompanying drawings, of which:—

Figure 1 is a functional diagram of the instant invention.

Figure 2 is a schematic diagram of the memory transfer circuitry of the instant invention.

Figure 3 is a schematic diagram of interfacing and control circuitry of the instant invention.

Figure 4 is a schematic diagram of control and decode logic circuitry of the instant invention.

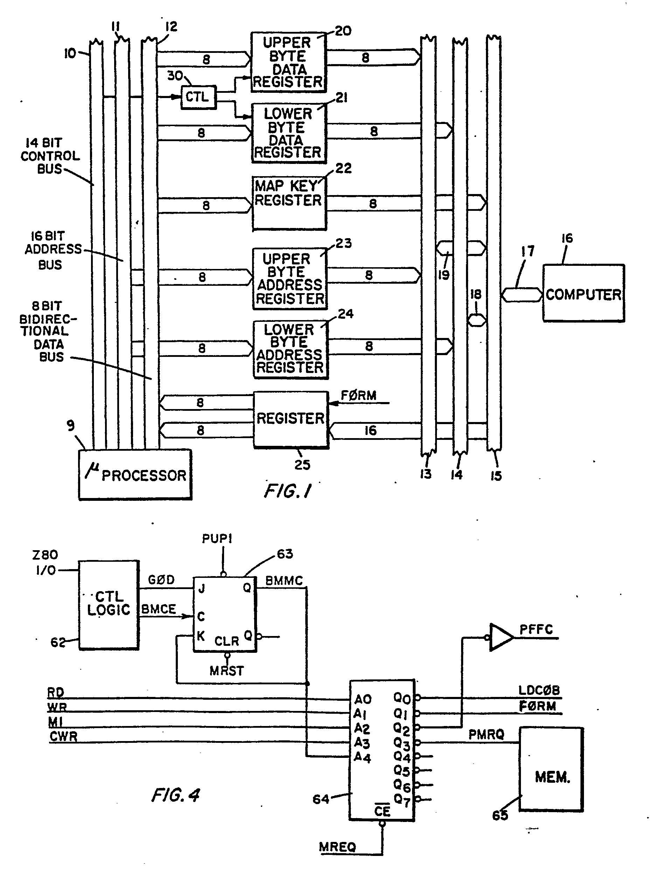

Referring now to Figure 1, there is shown a functional block diagram of the instant invention. A microprocessor 9 is provided with a control bus 10, an address bus 11 and a data bus 12. The bus 10 is a 14-bit control bus, the bus 11 is a 16-bit address bus, and the bus 12 is an 8-bit bidirectional data bus. In this embodiment the busses are assumed to be associated with a Z80 microprocessor, although other microprocessors may be used instead.

The minicomputer 16 is assumed to be of the Sperry Univac V70 series. Again, the invention may be used with other minicomputers. The minicomputer 16 is connected to the upper and lower byte tri-state busses 13 and 14, respectively, and to the address, data and control bus 15. The upper and lower byte busses 13 and 14 are provided since the microprocessor 9 produces an 8-bit data word and the computer 16 operates upon a 16-bit data word, with two bytes of data being required from the microprocessor 9 to form an appropriate data word for the computer 16.

The computer 16 is connected to the bus 15 by a suitable connecting link 17 such as drivers or the like. Likewise, the busses 13 and 14 are connected to the bus 15 by respective driver networks 19 and 18.

Upper and lower byte data registers 20 and 21 are connected to receive 8-bit data words from the data bus 12 and to supply these 8-bit data words as the upper and lower bytes to the busses 13 and 14, respectively. Appropriate control signals are applied by control logic 30 (CTL) which is controlled by control bus 10.

Upper and lower byte address registers 23 and 24 are also connected to receive input address signals from the bus 11 and to supply the output address signals to the busses 13 and 14, respectively.

A map key register 22 is connected to receive mapping information from the data bus 12 and to supply same to the control bus 15 in order to control the mapping of the memory in computer 16. A suitable register 25 (e.g., a FIFO memory) is connected to receive information from the bus 15 (16-bit words) and supply the information to bus 12 (two 8-bit bytes). Details of a suitable register are described in the co-pending European patent application by the present applicants, entitled Digital Information Transfer System and Interface (inventor: A. K. Fung) and published as EP—A—0026649.

In operation, the appropriate data bits are stored by the microprocessor 9 via data bus 12 in the upper and lower byte data registers 20 and 21. Subsequently, appropriate upper and lower byte address bits are supplied to the registers 23 and 24 by the microprocessor 9 via the bus 11. Also the map key register 22 is set to the appropriate memory page by the microprocessor 9 along bus 12. When a "block move" instruction is executed by the microprocessor 9, the information is externally transferred as described hereinafter. To the microprocessor 9, the operation is equivalent to relocating data from one portion of the microprocessor memory to another portion thereof. However, the data is actually redirected from the microprocessor memory and transferred in a direct memory access operation to the memory of the computer 16.

Conversely, in a pre-fetch or DMA operation, data can be transferred directly from computer 16 to the microprocessor via register 25. That is, the 16-bit word is applied to register 25 by bus 15. The information is then supplied to bus 12 as two 8-bit bytes and stored in the memory of the microprocessor. Such an operation is described in the co-pending patent European patent application referred to above.

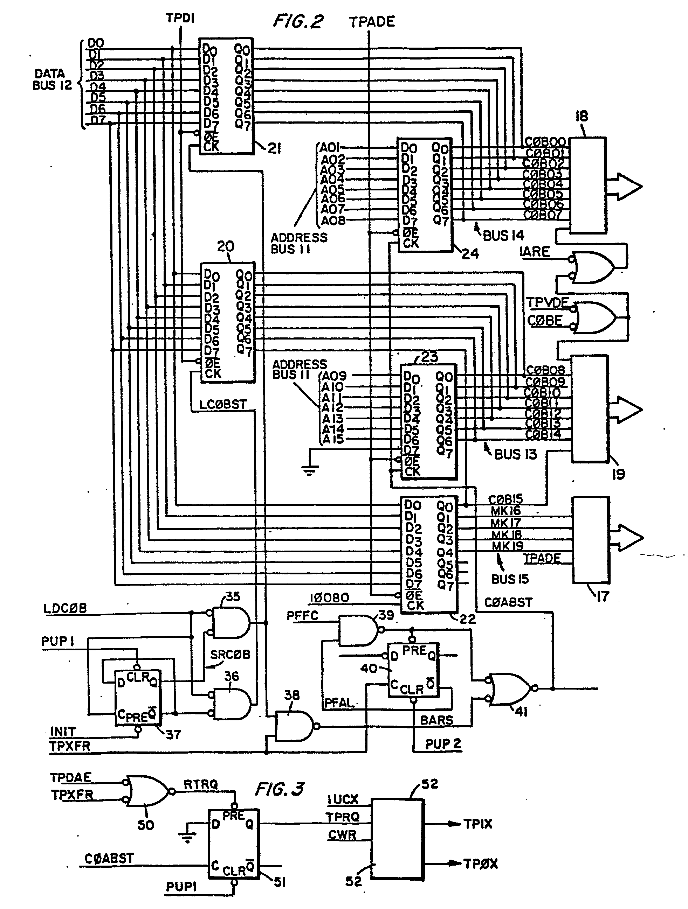

Figure 2 shows a more detailed diagram of the circuitry of the instant invention. The upper and lower byte data registers 20 and 21 are connected to the data bus 12. The inputs of the map key register 22 are also connected to the same data bus 12. The address bus 11 is connected to the inputs of the upper and lower byte address registers 23 and 24, respectively. The output terminals of the lower byte data register 21 and the lower byte address register 24 are connected together and to the bus 14. Similarly, the output terminals of the upper byte data register 20 and the upper byte address register 23 are connected together and to the bus 13. The output terminals which form the busses 13, 14 and 15 are connected by appropriate driver networks 18 and 19 to the minicomputer bus 15, which is itself connected to the minicomputer 16 via the driver network 17.

This circuit arrangement is necessary inasmuch as the computer 16 is a 16-bit system while the microprocessor involved is an 8-bit system. The data bits D0 through D7 are applied to both the upper and lower byte data registers 20 and 21, respectively, via data bus 12. The bits D0 through D7 are selected by the respective registers 20 and 21 at consecutive time periods as controlled by the signals supplied to the clock (CK) terminals of the respective registers. Thus, bits D0 through D7 are first entered into the lower byte data register 21 in which the bits are latched and stored. Subsequently, the next 8-bit byte is applied as data bit D0—D7 to the upper byte data register 20 in which that information is then latched and stored. The output bits CØB00 through CØB07 are supplied from the lower byte register 21 to the bus 14 and then to the driver circuit 18. Output bits CØB08 through CØB15 are supplied from the upper byte register 20 via the bus 13 to the driver circuit 19. These signals are then supplied from the driver circuits 18 and 19 to the bus 15 (Figure 1) where the bits are assembled into a 16-bit format and supplied to the computer 16.

Likewise, the data bits D0 through D7 are supplied to the map key register 22 and, thence through the bus 15 to the minicomputer 16 as noted above. The map key register 22 permits appropriate mapping arrangements so that a greater memory capacity can be utilized in the system.

In a similar manner, the upper and lower byte address registers 23 and 24 are connected to the address bus 11 to receive the address signals. In particular, the signals A09 through A15 are supplied to the upper byte address register 23 while the signals A01 through A08 are supplied to the lower byte address register 24. The output terminals of the registers 23 and 24 are connected to the driver registers 19 and 18 via the busses 13 and 14, respectively.

In order to assure proper control, the data-ready (DRY) status is controlled by DRY circuitry (not shown) which in turn generates the trap data input signal (TPDI) which is supplied to enable terminals (ØE) of registers 20 and 21. Only during the DRY cycle can data be transferred from the registers 20 and 21 to the respective data busses 13 and 14.

Conversely, only during the function-ready (FRY) condition are the address registers 23 and 24 and the map register 22 enabled. The FRY condition, in turn, generates the trap address enable signal (TPADE) which is then supplied to the enable terminals (ØE) of registers 22, 23 and 24, enabling these registers to place the appropriate data onto the busses 13 and 14, respectively. The FRY and DRY control circuits produce enabling signals at different times so that the data or address registers are enabled at different times.

To control the clocking, and, thus, the loading of the data registers, a load control circuit is provided. This circuit includes a flip-flop 37, and inverting AND gates 35 and 36. The clear (CLR) terminal of flip-flop 37 is connected to receive the pull-up input signal PUP1. The initialization signal (INIT) is supplied to the pre-set (PRE) input terminal of flip-flop 37. With the application of this signal, flip-flop 37 is pre-set to the condition wherein the Q output terminal produces a high level signal and the Q̄ terminal produces a low level signal. These signals are applied to one input terminal of each of the inverting NAND gates 35 and 36.

4

The other input terminals of gates 35 and 36 are connected to receive the load controller output buffer control signal (LDCØB). As the signal LDCØB is supplied to one input each of the gates 35 and 36, both these gates are placed in the same condition relative to this signal. However, the output signals supplied by flip-flop 37 are the inverse of one another. Therefore, with the application of the initialization signal INIT, the gates 35 and 36 are placed into mutually opposite logic states. The application of the load signal LDCØB to the gates 35 and 36 causes one of the gates to become operative. If this is gate 36, the register 20 is clocked, and latches and transfers the signals therein. At the same time, the LDCØB signal is supplied to the clock input terminal C of the flip-flop 37 and causes it to toggle. The signal levels at the Q and Q̄ output terminals are switched and the states of the gates 35 and 36, their output signals, reversed. Consequently, the register 21 now becomes operative and the register 20 is inoperative, being unable to receive and store signals.

The address bus, registers 23 and 24, are similarly activated by the application of the CØABST signal which is produced by an inverting NOR gate 41. One input terminal of the gate 41 is connected to the output terminal of an inverting AND gate 38 which receives the trap transfer (TPXFR) signal from the microprocessor 9 to indicate a DMA data transfer, and also the output signal from gate 35. The trap transfer signal is used only when DMA data are to be transferred.

In the absence of the TPXFR signal, the gate 38 does not produce an output signal for causing DMA operation and, therefore, no DMA address is entered into the address registers 23 and 24. In addition, the gate 41 receives an output signal from inverting AND gate 39 which receives the pre-fetch input signal (PFFC) as well as the Q̄ signal from a flip-flop 40 receives the PUP2 signal at its clear (CLR) input terminal. The ·C input terminal of the flip-flop 40 receives the TPXFR signal, while the D terminal receives the read/write command (CWR) signal which, during the initial DMA start-up cycle, activates the gate 39. With the pre-fetch signal (PFFC) present for the first DMA cycle, the first word will be fetched from the computer memory as described hereinafter. The pre-set terminal (PRE) of flip-flop 40 is connected to the output terminal of gate 39 and the second input terminal gate 41. This has the effect of de-activating the latch flip-flop 40 after the first DMA cycle.

With the application of the TPXFR signal, the status of the gate 38 and the Q̄ output of the flip-flop 40 are controlled. In addition, the signal level at one input terminal of the gate 41 is established via the gate 38. With the operation of the flip-flop 40, the status of the gate 39 is also controlled. With the application of the pre-fetch signal (PFFC), the gate 39 provides signals to the flip-flop 40 and the gate 41 which control the output signal which is produced by the gate 41 and supplied to the registers 23 and 24 to establish the clocking operation relative thereto.

Figure 3 shows a detailed circuit diagram for the computer-oriented circuitry. In particular, Figure 3 shows the trap logic as well as the execute command and data output decode interfacing circuitry. In particular, an inverting NOR gate 50 receives the TPDAE and the trap transfer (TPXFR) signals at its input terminals. These signals are supplied by the microprocessor and the computer control circuitry. The gate 50 supplies a reset trap request output signal (RTRQ) to the pre-set terminal of a flip-flop 51. The CLR terminal of the flip-flop 51 receives the PUP1 signal referred to above. The D input terminal of flip-flop 51 is grounded, and the C input terminal receives the CØABST signal from the gate 41 of Figure 2. The Q̄ output terminal of flip-flop 51 is left unconnected, while the Q output terminal is connected to supply the trap request TPRQ signal to one input terminal of the trap logic circuit 52 which, together with the signal CWR, selects whether information is to be transferred to or from computer 16 by means of the trap-in (TPIX) and the trap-out (TPØX) signals respectively. The trap logic circuit 52 is connected to receive the interrupt clock IUCX signal, in addition the command read/write signal (CWR), from a computer receiver interface circuitry (not shown). The IUCX signal is used to synchronize the data transfer with the bus 15. The output terminals of trap logic circuit 52 produce the signal TPIX, which is supplied to the computer 16 when information data are to be transferred from the microprocessor 9 to the computer, and the output signal TPØX, which is supplied to the computer 16 when data are to be transferred from the computer memory to the microprocessor.

Figure 4 shows a detailed circuit diagram of the microprocessor bus control PROM 64 and the address decode logic used therewith. In particular, control logic circuit 62 receives control signals from the microprocessor I/O (input/output) port. The control logic circuit 62 supplies the data output signal (GØD) to the J terminal of flip-flop 63, and the block move control enable signal (BMCE) to the clock or toggle input terminal C of the flip-flop 63. The pre-set terminal receives the PUP1 signal while the clear (CLR) terminal receives the master reset signal (MRST). The Q output terminal of the flip-flop 63 is returned to the K input terminal thereof and, also, the terminal A4 of the bus control PROM 64. The A3 terminal of the PROM 64 receives the CWR signal while the A0 and A2 terminals receive the read (RD) and M1 signals, respectively. The write (WR) signal is supplied to terminal A1 of PROM 64. The output terminals of the PROM 64 are connected to produce, on terminals Q0 through Q3, the signals LDCØB, FØRM, PFFC and PMRQ respectively. The PFFC signal is the pre-fetch signal referred to above in connection with Figure 2. The LDCØB signal is supplied to the gates 35, 36 and 37 of Figure 2. The FØRM signal is supplied to the computer output buffer interface circuitry and controls operation of register 25 for transferring data and function signals from the computer 16 to the microprocessor 9. The PMRQ signal is supplied to an input terminal of the microprocessor memory 65.

The PMRQ signal selectively enables or disables microprocessor memory 65 such that data is not returned to the local memory during a DMA transfer, or vice versa. That is, if the local memory is not disabled, the circuit acts as a "block-move" circuit and a block of data is relocated within the local memory. In this event, data is not transferred to the computer 16. In addition, operation of PROM 64 selectively causes the microprocessor to interface directly with the memory in the computer because the FØRM signal enables appropriate tri-state drivers associated with the register 25.

Table I below illustrates the basic operation of the bus control PROM 64. The PROM 64 receives five inputs and, thus, must operate on 32 possible combinations of signals. These combinations are numbered 0 (00000) to 31 (11111). These input signal combinations represent addresses for the PROM. The output signals represent the contents of the respective addresses which are listed. These output signals control the operation of the interfacing circuit. For example, the combination number 17 has the address 10001 and the output 1100. This combination indicates that input signals BMMC and RD are binary ones and the other input signals are binary zeroes. The output signals PMRQ and PFFC are binary ones and the other output signals are binary zeroes. The input signals are assumed to be based on positive logic (i.e., 1=true), while the output signals are based on negative logic (i.e., 1=false).

More particularly, this condition indicates that latch 63 has been set to select the phantom memory and the block move instruction (i.e., BMMC=1). Also, the microprocessor has selected the read condition (i.e., RD=1). Conversely, the write (WR), operation code fetch (M1) and DMA transfer direction (CWR) are not selected (i.e., the microprocessor is not doing an operation code fetch, and the DMA transfer is from the computer 16 to the microprocessor 9). As a consequence, the contents of this PROM address, i.e. 1100, produce the signal (FORM) which enables the register 25 for DMA transfer and at the same time the LØCØB triggers another DMA fetch cycle from computer 16. Thus, the microprocessor memory can receive data from the computer memory. Also, in response to the PFFC=1 signal, gate 41 is forced to produce the signal CØABST which stores the address delivered by the microprocessor 9 in address registers 23 and 24 and sets flip-flop 51 to place trap logic circuit 52 in the TPØX state. With these conditions, the computer 16 can write data into the register 25 for the next DMA operation. This completes the fetch cycle of the DMA operation. On the next microprocessor Z80 cycle, the PROM 64 address (10010) indicates the microprocessor is performing a write cycle (WR). The corresponding output 0111 of the PROM 64 makes PMRQ=0, and this enables the microprocessor destination memory to receive the data from register 25 thus completing the store cycle of the DMA operation. It is clear, of course, that the microprocessor operation has not been particularly affected by the DMA operation. Data has been transferred directly from the computer memory to the microprocessor destination memory without requiring specifically dedicated microprocessor control signals. In short, during the fetch operation of the DMA cycle, the microprocessor 9 performs a fetch cycle from its local memory, while the bus control PROM 65 enables the register 25, disables the local memory and places instead the data from register 25 onto bus 12 for the microprocessor to pick up. At the same time, the next DMA word is fetched from the memory of minicomputer 16. During a store cycle, the microprocessor writes the data into the local memory to receive the data. It must be emphasised that the microprocessor only "knows" of and operates in its own memory space and its own domain. At no time does the microprocessor "realise" that a DMA operation is being performed between two separate systems. In this manner, software programs and hardware circuits can be designed in a simpler fashion. The same is true for the minicomputer.

Likewise, in the "pre-fetch" operation, data in a specified location in the computer is transferred to the microprocessor without requiring specifically dedicated microprocessor action. In this operation, the microprocessor supplies the signal 00001 (combination 2) to the PROM 64 thereby indicating that a read (RD) operation is to occur. The PROM output signal 0011 enables the microprocessor memory 65 (PMRQ=0), 0 and, also, the gate 39. As a result, the gate 41 produces the CØABST signal which sets the flip-flop 51 to produce the TPØX signal, and so cause the computer 16 to output data. In the meantime, computer 16 has made the microprocessor 9 read an address which is coincident with the first DMA address in the minicomputer memory. The address and the corresponding contents are applied to the busses 15 and 12, respectively. However, the load signal (LDCØB=1) does not enable the data registers 20, 21 and as data are actually transferred into them from the microprocessor memory. The CØABST signal (see above) has, however, enabled the address registers 23, 24. The address, thus, stored in registers 23, 24 points to the address in the computer memory, so that data is transferred to the register 25 from the computer memory. ‾ ·˙

In transferring data from the microprocessor 9 to the computer 16 (combinations 25 and 26), a two-step operation is used. The input signal 11001 to PROM 64 produces the output signals 0111. The PMRQ=0 signal enables the microprocessor memory 65 which then permits the selected data to be placed on bus 12. Thereafter, the input signal 11010 produces the PROM 64 output signals 1110. The LDCØB=0 signal causes registers 20 or 21 to be loaded in accordance with the description above.

Thus, the microprocessor 9 operates without special instructions from the computer and vice versa. Rather, information is merely "dumped onto the busses" and selectively directed in accordance with the operation of the interface circuitry as controlled by the PROM 64.

TABLE I

| # | BMMCR CRIRD | PPFO MFOC RFRØ QCMB | # | BMMCR CRIRD | PPFD MFOC RFRØ QCMB |
|---|---|---|---|---|---|
| 0 | 0 0 0 0 0 | 0 1 1 1 | 16 | 1 0 0 0 0 | 1 1 1 1 |
| 1 | 0 0 0 0 1 | 0 0 1 1 | 17 | 1 0 0 0 1 | 1 1 0 0 |
| 2 | 0 0 0 1 0 | 0 1 1 1 | 18 | 1 0 0 1 0 | 0 1 1 1 |
| 3 | 0 0 0 1 1 | 0 1 1 1 | 19 | 1 0 0 1 1 | 1 1 1 1 |
| 8 | 0 1 0 0 0 | 0 1 1 1 | 24 | 1 1 0 0 0 | 1 1 1 1 |
| 9 | 0 1 0 0 1 | 0 1 1 1 | 25 | 1 1 0 0 1 | 0 1 1 1 |
| 10 | 0 1 0 1 0 | 0 1 1 1 | 26 | 1 1 0 1 0 | 1 1 1 0 |
| 11 | 0 1 0 1 1 | 0 1 1 1 | 27 | 1 1 0 1 1 | 1 1 1 1 |
| 12 | 0 1 1 0 0 | 0 1 1 1 | 28 | 1 1 1 0 0 | 1 1 1 1 |
| 13 | 0 1 1 0 1 | 0 1 1 1 | 29 | 1 1 1 0 1 | 0 1 1 1 |
| 14 | 0 1 1 1 0 | 0 1 1 1 | 30 | 1 1 1 1 0 | 1 1 1 1 |
| 15 | 0 1 1 1 1 | 0 1 1 1 | 31 | 1 1 1 1 1 | 1 1 1 1 |

Thus, there is shown and described a circuit which permits direct memory accessing (DMA) between a microprocessor and a computer memory. That is, information in the memory of the microprocessor is placed on the busses 11 and 12 of the microprocessor under control 16, and in response to, signals within the microprocessor. Depending upon other control signals which are supplied to the bus control PROM 64 and the latch 63, the information is transferred to the computer 16 via the interfacing network. That is, data is transferred to the appropriate registers (20, 21) for transfer to the computer. The address for the data is also transferred by appropriate registers (23, 24) to the computer in a similar fashion. The map key register 22 selects that portion of the computer memory to which the data is to be transferred. The microprocessor is an 8-bit machine or system, while the computer is a 16-bit machine or system. Consequently, data to be supplied to the computer has to be provided by the microprocessor in two 8-bit bytes. These bytes are identified as the upper and lower bytes.

In this embodiment, the addresses of the bytes are also transferred in 8-bit bytes to be utilized in the 16-bit machine. However, in order to expedite the transfer and to reduce the number of components which are required, the address information, which is to be transferred to the computer, is shifted by one bit on input into the address registers 23 and 24. For example, register 24 receives the address bits A01 through A08. These bits are supplied to the computer bus as the computer address bits CØB00 through CØB07. Similarly, address bits A09—A15 are transferred via register 23. The shifting of addresses A00—A15 has the effect of reducing the addresses supplied to the computer by one-half, or, in other words, packing two 8-bit data bytes into one 16-bit word.

By referring to Table II is seen that the omission or dropping of the least significant bit (A00) in the address registers has the effect of transferring two consecutive data bytes into the same address in the computer memory. This circuit arrangement effects a substantial saving in the circuitry components required to transfer the data from the microprocessor to the computer.

# 0 026 648

### TABLE II

| | | Microprocessor address | | | | Computer address | |
|---|---|---|---|---|---|---|---|
| | | A02 | A01 | A00 | | CØB01 | CØB00 |
| 0) | | 0 | 0 | 0 | 0) | 0 | 0 |
| 1) | | 0 | 0 | 1 | | 0 | 0 |
| 2) | | 0 | 1 | 0 | 1) | 0 | 1 |
| 3) | | 0 | 1 | 1 | | 0 | 1 |
| 4) | | 1 | 0 | 0 | 2) | 1 | 0 |
| 5) | | 1 | 0 | 1 | | 1 | 0 |
| 6) | | 1 | 1 | 0 | 3) | 1 | 1 |
| 7) | | 1 | 1 | 1 | | 1 | 1 |

The foregoing description of an embodiment, illustrates how a DMA operation is effected between a microprocessor and a computer. Use is made of the existing firmware, i.e., the "block data move" instruction in the microprocessor. It permits a DMA operation to be effected through standard registers. It also permits the data transfer to be effected externally, i.e. from memory-to-memory across a boundary between two separate systems or machines. In effect, the microprocessor operates in such a fashion that the computer memory appears to be a part of the microprocessor memory, and whenever a block data move or manipulation is completed within the microprocessor, the DMA operation is also completed vis-a-vis the computer. This operation, as performed by the present invention, permits the transfer of data provided the requisite address and data identifications are available in the microprocessor. It must be recognized that the microprocessor does not actively "transfer" data to the computer. Instead, the microprocessor places data onto a data bus as if for an internal operation. However, other logic signals are supplied to a PROM which effectively diverts the data from the bus to an interfacing circuit and, thence, to the computer. The computer, likewise, places data on to the microprocessor data bus via interfacing circuitry. As a result, the circuitry in the computer and microprocessor are altered in only insignificant ways but the very powerful data transfer capability is obtained.

## Claims

1. Digital data processing apparatus arranged for the transfer of data from a microprocessor (9) coupled to a first bus system (10, 11, 12), to a computer (16) coupled to a second bus system (13, 14, 15), an address register (23, 24) and a data register (20, 21) being coupled between the first and second bus systems, and control logic (30) being coupled to the microprocessor bus (10, 11, 12) characterised in that the control logic (30) includes a latch (63) coupled to a programmable read-only memory (64), and in that when the microprocessor (9) decodes an instruction calling for an external memory transfer it sets the latch (63), thereby causing the programmable read-only memory (64) in response to a predetermined output signal from the latch (63) and to selected control signals from the microprocessor (9) to provide control signals disabling writing into the local memory (65) and enabling the address and data registers (23, 24, 20, 21), whereby, when the microprocessor carries out its internal transfer instruction data and addresses are routed from the first bus system to these registers from where they are taken over to the second bus system in a direct memory access mode.

2. Digital data processing apparatus according to claim 1 in which a further register (25) is coupled between the bus systems to enable data to be transferred from the computer to the microprocessor.

3. Digital data processing apparatus according to claim 1 or claim 2 further including a map key register (22) coupled between the bus systems to map data signals supplied by the microprocessor (9) into the memory addresses in the computer (16).

4. Digital data processing apparatus according to any preceding claim in which the microprocessor (9) has a word length equal to one-half of the computer word length, the data register comprises an upper data register (20) and a lower data register (21) each holding a half-word, and a load control circuit (35, 36, 37) enables them consecutively.

## Patentansprüche

1. Digitales Datenverarbeitungsgerät zur Übertragung von Daten aus einem an einem ersten

8

Sammelleitungssystem (10, 11, 12) angeschlossenen Mikroprozessor (9) zu einer an einem zweiten Sammelleitungssystem (13, 14, 15) angeschlossenen Rechenanlage (16), wobei zwischen den beiden Sammelleitungssystemen ein Adreßregister (23, 24) und ein Datenregister (20, 21) angeschlossen sind und eine Steuerlogik (30) an der Sammelleitung (10, 11, 12) des Mikroprozessors liegt, dadurch gekennzeichnet, daß die Steuerlogik (30) eine mit einem nur dem Lesen dienenden, programmierbaren Speicher (64) verbundene Klinkschaltung (63) aufweist, und daß bei der Decodierung eines Befehles, der einen äußeren Speicher erfordert, der Mikroprozessor (9) die Klinkschaltung (63) einstellt und den nur dem Lesen dienenden, programmierbaren Speicher (64) veranlaßt, in Abhängigkeit von einem vorgegebenen Ausgangssignal aus der Klinkschaltung (63) und von gewählten Steuersignalen aus dem Mikroprozessor (9) Steuersignale hervorzubringen, die das Schreiben in den Nebenspeicher (65) unmöglich machen und das Adreß- und Datenregister (23, 24, 20, 21) einschalten, so daß bei der Ausführung des inneren Übertragungsbefehles durch den Mikroprozessor Daten und Adressen vom ersten Sammelleitungssystem zu diesen Registern geleitet werden, von wo aus sie in einem direkten Speicherzugriff zum zweiten Sammelleitungssystem übernommen werden.

2. Digitales Datenverarbeitungsgerät gemäß Anspruch 1, bei dem ein weiteres Register (25) zwischen den Sammelleitungssystemen angeschlossen ist, damit die Daten aus der Rechenanlage zum Mikroprozessor übertragen werden können.

3. Digitales Datenverarbeitungsgerät gemäß Anspruch 1 oder Anspruch 2, das ferner ein zwischen den Sammelleitungssystemen angeschlossenes Tastregister (22) enthält, um die vom Mikroprozessor (9) zugeführten Datensignale nacheinander in die Speicheradressen der Rechenanlage (16) einzubringen.

4. Digitales Datenverarbeitungsgerät gemäß irgendeinem vorhergehenden Anspruch, bei dem der Mikroprozessor (9) eine Wortlänge besitzt, die gleich der halben Wortlänge der Rechenanlage ist, und bei dem das Datenregister ein oberes Datenregister (20) und ein unteres Datenregister (21) enthält, die je ein halbes Wort festhalten, und ein Laststeuerkreis (35, 36, 37) sie nacheinander freigibt.

**Revendications**

1. Appareil de traitement de données numériques conçu pour transférer des données d'un microprocesseur (9) relié à un premier système de bus (10, 11, 12) vers un ordinateur (16) relié à un second système de bus (13, 14, 15), un registre d'adresses (23, 24) et un registre de données (20, 21) étant insérés entre les premier et second systèmes de bus, et une logique de commande (30) étant reliée au bus du microprocesseur (10, 11, 12), caractérisé en ce que la logique de commande (30) comprend une bascule de verrouillage (63) reliée à une mémoire morte programmable (64) et en ce que, lorsque le microprocesseur (9) décode une instruction appelant un transfert vers une mémoire externe, il met au niveau 1 la bascule (63), ce qui oblige la mémoire morte programmable (64), en réponse à un signal de sortie prédéterminé de la bascule (63) et à des signaux de commande sélectionnés provenant du microprocesseur (9), à émettre des signaux de commande inhibant l'inscription dans la mémoire locale (65) et validant les registres d'adresses et de données (23, 24, 20, 21), ce qui fait que, lorsque le microprocesseur exécute son instruction de transfert interne, des données et des adresses sont acheminées du premier système de bus vers ces registres d'où elles sont prises en charge par le second système de bus selon un mode d'accès direct en mémoire.

2. Appareil de traitement de données numériques selon la revendication 1, dans lequel un registre supplémentaire (25) est inséré entre les systèmes de bus pour permettre le transfert de données de l'ordinateur vers le microprocesseur.

3. Appareil de traitement de données numériques selon la revendication 1 ou la revendication 2, comprenant en outre un registre de plan d'occupation mémoire (22) inséré entre les systèmes de bus pour placer, en fonction de ce plan, des signaux de données fournis par le microprocesseur (9) dans les adresses de mémoire de l'ordinateur (16).

4. Appareil de traitement de données numériques selon l'une quelconque des revendications précédentes, dans lequel le microprocesseur (9) a une longueur de mot égale à une moitié de la longueur de mot de l'ordinateur, le registre de données comprend un registre de données supérieur (20) et un registre de données inférieur (21), chacun d'eux contenant un demi-mot, et un circuit de commande de chargement (35, 36, 37) les valide successivement.

FIG. 1

FIG. 4

FIG.2

FIG.3